(19) Europäisches Patentamt
European Patent Office
Office européen des brevets

(11) Veröffentlichungsnummer: **0 423 564 A2**

# (12) EUROPÄISCHE PATENTANMELDUNG

(21) Anmeldenummer: **90119139.5**

(22) Anmeldetag: **05.10.90**

(51) Int. Cl.5: **C08L 77/00**, //C08J5/24, (C08L77/00,61:06)

(30) Priorität: **18.10.89 DE 3934710**

(43) Veröffentlichungstag der Anmeldung: **24.04.91 Patentblatt 91/17**

(84) Benannte Vertragsstaaten: **DE FR GB IT NL**

(71) Anmelder: **BAYER AG**
**W-5090 Leverkusen 1 Bayerwerk(DE)**

(72) Erfinder: **Heinz, Hans-Detlef, Dr.**
**Breslauer Strasse 31**
**W-4150 Krefeld 11(DE)**
Erfinder: **Elsner, Thomas, Dr.**
**Sudallee 70**
**W-4000 Düsseldorf 13(DE)**
Erfinder: **El Sayed, Aziz, Dr.**
**Saarlauterner Strasse 39**
**W-5090 Leverkusen(DE)**
Erfinder: **Goldmann, Gerd, Dr.**
**Emil-Feinendegen-Strasse 1**
**W-4150 Krefeld 12(DE)**
Erfinder: **Dujardin, Ralf, Dr.**
**Bodelschwinghstrasse 18**
**W-4150 Krefeld(DE)**

## (54) Verfahren zur Herstellung von Halbzeugen/Verbundwerkstoffen.

(57) Die Erfindung betrifft ein Verfahren zur Herstellung von verstärkten Halbzeugen/Verbundwerkstoffen, die nach dem Verfahren hergestellten Halbzeuge/Verbundwerkstoffe sowie Fertigteile aus den erfindungsgemäßen Halbzeugen und Verbundwerkstoffen, dadurch gekennzeichnet, das zur Herstellung spezielle Polyamidmassen, enthaltend Phenolverbindungen, insbesondere Novolake, verwendet werden.

EP 0 423 564 A2

## VERBESSERTES VERFAHREN ZUR HERSTELLUNG VON HALBZEUGEN/VERBUNDWERKSTOFFEN

Die Erfindung betrifft ein verbessertes Verfahren zur Herstellung von verstärkten Halbzeugen/Verbundwerkstoffen, die nach diesem Verfahren hergestellten Halbzeuge/Verbundwerkstoffe sowie Fertigteile aus den erfindungsgemäßen Halbzeugen und Verbundwerkstoffen, dadurch gekennzeichnet, das zur Herstellung spezielle Polyamidmassen, enthaltend Phenolverbindungen, insbesondere Novolake, verwendet werden.

Die Herstellung von Halbzeugen/Verbundwerkstoffen aus Thermoplasten und Verstärkungsmaterialien (z.B. Glas-, Kohlenstoff- und Aramidendlosfasern, flächigen Geweben (Matten) auf Basis von Glas-, Kohlenstoff- und Aramidfasern oder auch aus Mischgeweben u.a.m.) nach verschiedenen Verfahren, z.B. der Pultrusion, des Verpressens von Geweben und Folien (film-stacking) u.a.m., ist bekannt (z.B. Encyclopedia of Polymer Science and Engineering, 2nd Edition, Band 13, Wiley-Interscience, New York 1988).

Thermoplaste, die hierfür eingesetzt werden sollen, sind in Bezug auf das Molekulargewicht gewissen Einschränkungen unterworfen. Dieses muß relativ niedrig gehalten werden, um eine gute Benutzung der Verstärkungsmittel zu ermöglichen. So ist z.B. bei der Pultrusion die Abziehgeschwindigkeit und damit die Wirtschaftlichkeit umso höher, je niedriger das Molekulargewicht des eingesetzten Polyamids ist. Einer Absenkung des Molekulargewichts sind nach unten natürlich Grenzen gesetzt (Herstellbarkeit, Eigenschaften).

Zu hohe Molekulargewichte wirken sich aufgrund einer schlechteren Benetzung i.a. auch durch schlechtere Eigenschaften der Verbundwerkstoffe aus.

Überraschend wurde nun gefunden, daß durch Verwendung spezieller Polyamidmassen die Herstellung von verstärkten Halbzeugen/Verbundwerkstoffen auf Basis von Polyamiden als Thermoplastmatrix deutlich verbessert werden kann und wobei die resultierenden Halbzeuge/Verbundwerkstoffe auch deutlich verbesserte mechanische Eigenschaften und Oberflächen aufweisen können. Insbesondere ist bei der Pultrusion eine wesentlich erhöhte Abzugsgeschwindigkeit möglich, was sich in einer signifikanten Reduktion der Herstellkosten äußert.

Gegenstand der Erfindung ist daher ein Verfahren zur Herstellung von verstärkten Halbzeugen/Verbundwerkstoffen unter Verwendung aliphatischer Polyamidmassen als Thermoplastmatrix, dadurch gekennzeichnet, daß die zu verwendenden Polyamidmassen (A) zu

1) 75 - 99,0 Gew.-% aus an und für sich bekannten aliphatischen bzw. teilaromatischen Polyamiden,

2) 1 - 25 Gew.-% aus phenolischen Verbindungen der allgemeinen Formel (I),

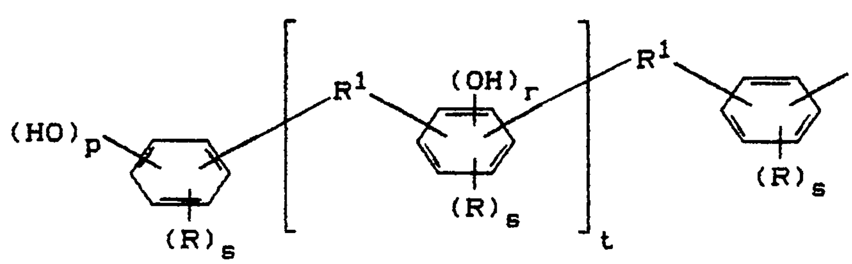

(I)

wobei

R unabhängig voneinander Wasserstoff, eine Gruppe

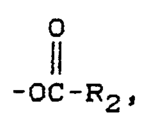

wobei $R_2$ ein $C_1$-$C_{10}$-Kohlenstoffrest ist, eine Gruppe

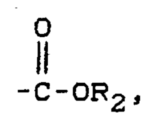

wobei $R_2$ die obige Bedeutung hat, $C_1$-$C_{20}$-(Ar)Alkyl, $C_6$-$C_{18}$-(Alk)aryl, wobei die (Ar)alkyl- bzw. (Alk)aryl-Reste substituiert, z.B. mit -OH, oder auch über z.B. -O- mit dem Kern verknüpft sein können,
$R^1$ unabhängig voneinander eine chemische Bindung, einen $C_1$-$C_{20}$-Alkylen oder (gegebenenfalls cyclischen) Alkyliden-Rest (gegebenenfalls substituiert durch -OH), eine Ester-, eine Amidgruppe,

$$-O-,\ -SO-,\ -SO_2-,\ -S-,\ -CO-,\ -\underset{|}{P}-,\ -\underset{|}{P}=O$$

oder auch eine Anellierung zweier oder mehrerer Ringe, p 1 oder 2, bevorzugt 1,
r für die Zahl 0, 1 oder 2, bevorzugt 1,
s für die Zahl 0, 1 oder 2, bevorzugt 0 oder 1,
t eine ganze Zahl von 0 bis 15 (Mittelwert), bevorzugt 0 bis 10,
bedeuten, mit der Maßgabe, das kein zu einer -OH-Gruppe orthoständiger Alkylrest R eine tertiäre Alkylgruppe sein soll, sowie
3) 0 bis 100 Gew.-%, vorzugsweise 0,01 bis 50 Gew.-%, bezogen auf die Summe der Gewichte von 1) und 2), aus weiteren, üblichen Zusatzstoffen bestehen, und
B) mit Verstärkungsstoffen, in Füllgraden von 20-90 Gew.-% Verstärkungsstoffen in den verstärkten Halbzeugen/Verbundwerkstoffen, nach an sich üblichen Techniken insbesondere Schmelzpultrusion oder Verpressen von Folien und Geweben (Filmstracking)) zur Herstellung von verstärkten Halbzeugen/Verbundwerkzeugen verwendet werden.

Beispiele für phenolische Verbindungen (2) der Formel (I) sind Alkylidenbisphenole wie 2,2-(Bis-4-hydroxyphenyl)-propan (Bisphenol A), Bis-4-hydroxyphenylmethan (Bisphenol F), 1,1-(Bis-4-hydroxyphenyl)-cyclohexan (Bisphenol Z), 1,1-(Bis-4-hydroxyphenyl)-ethan, 2,2-Bis-(4-hydroxyphenyl)-ethan, 1,2-(Bis-4-hydroxy-3,5-dimethylphenyl)-propan, 1,1-Bis-(4-hydroxyphenyl)-3,3,5-trimethylcyclohexan, 4,4'-Dihydroxydiphenylsulfon und Phenol- bzw. Alkylphenol-Formaldehyd-Kondensate (Novolake) mit im Mittel bevorzugt 3 - 15 Ringen pro Molekül.

Bevorzugte Additive 2) sind Alkylidenbisphenole, speziell Bisphenol A, Bisphenol F (auch Isomerengemische), 1,1-(Bis-4-hydroxyphenyl)-3,3,5-trimethylcyclohexan, 4,4'-Dihydroxydiphenylsulfon und insbesondere (Alkyl)phenol-Formaldehyd-Kondensate (Novolake).

Auch Bisphenole der Formeln

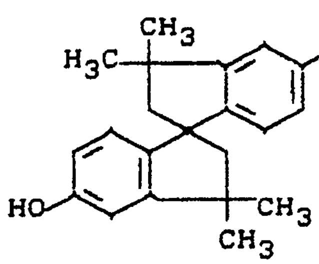

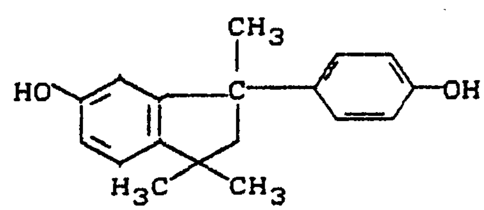

sind prinzipiell geeignet, wenn auch nicht bevorzugt.

Besonders bevorzugt sind Novolake der allgemeinen Formel (II),

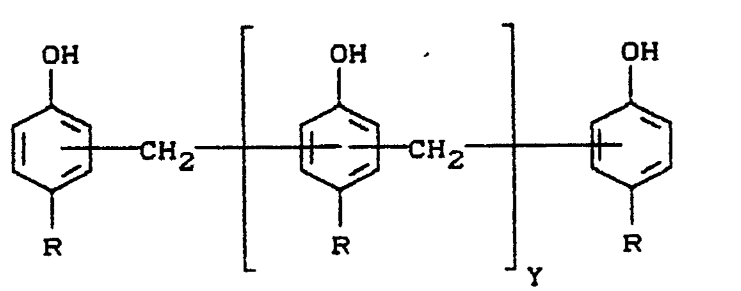

(II)

wobei

R für einen $C_{1-5}$-Alkylrest, einen Phenylrest oder (ganz besonders bevorzugt) für Wasserstoff steht und

Y eine ganze Zahl (Mittelwert) von 1 - 10 bedeutet,

so daß die Molekulargewichte der Novolake (II) ($\overline{M}$ n) zwischen ca. 300 und ca. 1500 g $mol^{-1}$ liegen.

Die Novolake der Formeln (I) und (II) können auch verzweigt sein, d.h. mehr als zwei Gruppen $R^1$ bzw. -$CH_2$-an einem oder mehreren Benzol-Kernen tragen.

Die phenolischen Verbindungen 2) können einzeln oder in einem beliebigen Gemisch eingesetzt werden. Sie sind bekannte Verbindungen oder können nach prinzipiell bekannten Verfahren hergestellt werden.

Als Polyamide 1) sind beispielsweise geeignet: PA 6, 66, 46, 610, 6 IT, 11, 12, 1010, 1212, 6/66-Copolyamide, 6/12-Copolyamide, 46/66-Copolyamide sowie Copolyamide auf Basis PA 6 bzw. PA 66 mit Terephthalsäure/Hexamethylendiamin als Cobausteinen. Bevorzugt sind PA 6, 66, 11, 12 und 6/66-Copolyamide. Besonders bevorzugt sind PA 6 und Copolyamide auf Basis PA 6, die aromatischen Anteile in teilaromatischen Polyamiden sind und in untergeordneten Mengen (< 50 Gew.-%, vorzugsweise ≦ 40 Gew.-%) in den Polyamiden 1) enthalten.

Die phenolischen Verbindungen 2) sind in den Polyamid -Compounds 1)+2) zu 1 - 25, bevorzugt 2 - 20 und besonders bevorzugt 5 - 20 Gew.-% enthalten.

Als Zusatzstoffe 3) sind u.a. geeignet: UV-Stabilisatoren, Antioxidantien, Nukleierungsmittel, Formtrennmittel, weitere Fließhilfen, Kristallisationsbeschleuniger, Kristallisationsverzögerer, Weichmacher, mineralische Füllstoffe, polymere Legierungspartner u.a.m., wie sie im Stand der Technik für Polyamide beschrieben sind.

Bevorzugt, jedoch nicht ausschließlich, werden die Komponenten 1)-3) vor ihrem Einsatz zur Herstellung der Verbundwerkstoffe nach dem erfindungsgemäßen Verfahren in der Schmelze mit einander vermischt (Extruder, Kneter). Die Vermischung kann jedoch, sofern gewünscht, auch erst während der Herstellung der Verbundwerkstoffe erfolgen.

Als Verstärkungsstoffe (B) für den Einsatz im erfindungsgemäßen Verfahren sind die zur Herstellung von Verbundwerkstoffen (Composites) üblichen Stoffe geeignet, z.B. Filamente (Endlosfasern) z.B. auf Basis von Glas, Kohlenstoff, Polyacrylnitril, Metall und Aramiden, wie sie im Stand der Technik beschrieben sind, oder daraus hergestellte Matten, Vlieser, Rovings etc.

Erfindungsgemäß können alle üblichen Techniken zur Herstellung von verstärkten Halbzeugen/Verbundwerkstofen auf Basis von Thermoplasten als Matrix, insbesondere die Schmelzpultrusion oder das Verpressen von Folien und Geweben (film-stracking), benutzt werden.

Der Füllgrad mit obengenannten Verstärkungsstoffen beträgt 20 - 90 Gew.-%, bevorzugt 30 - 85 Gew.-%, besonders bevorzugt 40 - 85 Gew.-%, an Verstärkungsstoffen (B) im verstärkten Halbzeugen/Verbundwerkstoffen (A+B).

Das erfindungsgemäße Verfahren ist gekennzeichnet durch die Verwendung der Polyamidmassen (A), enthaltend die erfinderisch besonders gekennzeichneten phenolischen Verbindungen 2), im Verfahren zur Herstellung von verstärkten Halbzeugen/Verbundwerkstoffen aus diesen Polyamidmassen (A) und den Verstärkungsstoffen (B).

Der Verfahrensablauf zur Herstellung von verstärkten Halbzeugen/Verbundwerkstoffen unter Verwendung der besonders günstigen Bisphenol-/Novolak-haltigen Polyamide entspricht in seiner grundsätzlichen Durchführung der Thermoplast/Verstärkungsstoffverwendung dem Stand der Technik, zeigt jedoch besonders günstige und unerwartete Verfahrenserleichterungen bzw. -vorteile.

Phenolische Verbindungen enthaltende Polyamidmassen sind im Teil der Technik bekannt (Bisphenol - haltige Verbindungen sind beschrieben in EP-0-240 887; EP-0-224 847; DE-OS 3 610 595; Novolak -haltige Polyamide in = UDSSR 687 088; V.N.Stepanov, A.A. Speranskii, L.S.Gerasimova, G.V. Khutarevar, Khim. Volokna 1978 (6), 51; V.N. Stepanov, A.V. Dolgov, A.A. Speranskii; Khim. Volokna 1977 (4), 31; V.N. Stepanov, V.F. Ednik, A.I. Cubnina, A.A. Speranskii, Khim. Volokna 1975 (4), 32; S.I. Shkurenko, V.M. Kharitonov, B.A. Khar'Kov, et. al., Khim. Volokna 1983 (5), 25). Viele der genannten Verbindungen fanden nochmals Erwähnung in JP 60/051 744 und WO 88/06169.

Der Stand der Technik offenbart solche Massen, die gegebenenfalls auch fasrige Verstärkungsstoffe enthalten können, aber ausschließlich für die Spritzguß- bzw. Extrusionsverarbeitung, bzw. zur Herstellung von Fasern. Es fehlt jeglicher Hinweis auf eine Verwendung zur Herstellung von verstärkten Halbzeugen/Verbundwerkstoffen auf Basis von Filamenten (Endlosfasern). Das erfindungsgemäße Verfahren ist daher nicht aus dem bekannten Stand der Technik ableitbar, insbesondere nicht seine unerwartet günstigen Verarbeitungsbedingungen, sowie die i.a. eintretende Verbesserung der Eigenschaften.

So zeichnet sich das erfindungsgemäße Verfahren bei erfindungsgemäßer Verwendung der phenolhaltigen Polyamidmassen durch erhöhte Produktionsgeschwindigkeit und Wirtschaftlichkeit aus. Gleichzeitig

oder alternativ, je nach Menge der Phenole 2), können z.B. die Verarbeitungstemperatur abgesenkt werden oder z.B. Abzugkräfte oder Preßdrucke erniedrigt werden. Weiterhin können die erfindungsgemäß zu verwendenden Polyamidmassen in den Halbzeugen/Verbundwerkstoffen bzw. Fertigteilen noch andere positive Effekte wie beispielsweise eine erhöhte Steifigkeit und UV-Stabilität u.a.m. bewirken. Das erfindungsgemäße Vefahren stellt daher eine wertvolle Bereicherung des Standes der Technik dar.

Gegenstand der Erfindung sind auch die nach dem erfindungsgemäßen Verfahren hergestellten Halbzeuge/Verbundwerkstoffe auf Basis von Verstirkungs-Filamenten. Aus ihnen können nach den üblichen Verfahren, z.B. Wickeln, Bandlegetechnik, Pressen, Tiefziehen usw., Fertigteile hergestellt werden. Diese sind ebenfalls Gegenstand der Erfindung.

Die folgenden Beispiele unter Verwendung typischer Einsatzstoffe in typischen Mengen dienen zur Erläuterung der Erfindung, ohne sie darauf einzuschränken.

Beispiele

Beispiele 1 - 4 (nicht erfindungsgemäß)

Ein niederviskoses Polyamid 6 ($\eta_{rel}$ 1 % in m-Kresol, 25° C ≈ 2,9) wurde bei 260° C und 30 $Kgh^{-1}$ Durchsatz über einen ZSK-53-Doppelwellenextruder mit 5, 10 und 18 Gew.-% (bezogen auf Mischung) eines Phenol-Formaldehyd-Novolaks (Phenol: $CH_2O$ ≈ 1 : 0,78) bzw. ohne Zusatz compoundiert. Die Stränge werden in einem Wasserbad abgekühlt und gehächselt.

Die Proben wurden als Ausgangsmaterialien für Pultrusionsversuche eingesetzt.

Beispiele 5 - 8 (erfindungsgemäß)

Die in den Beispielen 1 - 4 hergestellten PA-Proben, enthaltend 0,5, 10 und 18 % Novolak, wurden über einen Einwellenextruder bei 290° C in eine Kammer gefördert, durch die im Gegenstrom Endlosglasfasern liefen. Die imprägnierten Filamente (61 Gew.-% Glas enthaltend), wurden als Bändchen auf eine Rolle aufgewickelt.

Bestimmt wurde die Abzugskraft, die aufgewendet werden mußte, um die Endlosglasfasern mit einer Geschwindigkeit von 1 m $min^{-1}$ durch die Schmelze zu ziehen (Tabelle 1).

Tabelle 1

| Beispiel | Novolak [Gew.-%] | $F_A$* [N] |
|---|---|---|
| 5 | - | 46 |
| 6 | 5 | 43 |
| 7 | 10 | 39 |
| 8 | 18 | 36 |

* Abzugskraft in [N]

Die Beispiele zeigen, das durch erfindungsgemäßen Zusatz der Phenole 2) die Abzugskräfte bei gleicher Abzugsgeschwindigkeit deutlich verringert werden können, d.h., eine schonendere Verarbeitung möglich ist.

Beispiele 9 - 13

In der für die Beispiele 5 - 8 beschriebenen Weise wurde für das 18 % Novolak enthaltende modifizierte Polyamid geprüft, wieweit die Abzugsgeschwindigkeit erhöht werden kann, bis die Abzugskraft des unmodifizierten Polyamids (Beispiel 5) erreicht wird (Tabelle 2).

Tabelle 2

| Beispiel | W* [m $min^{-1}$] | $F_A$** [N] |
|---|---|---|
| 8 | 1 | 36 |
| 9 | 1,5 | 37 |
| 10 | 2 | 38 |
| 11 | 3 | 41 |
| 12 | 4 | 46 |
| 13 | 5 | 50 |
| 5 | 1 | 46 |

W* Abzugsgeschwindigkeit
$F_A$** = Abzugskraft

Wie die Beispiele zeigen, kann die für die Wirtschaftlichkeit des Verfahrens bestimmende Abzugsgeschwindigkeit bei gleicher Abzugskraft um den Faktor 4 gesteigert werden. Dies dokumentiert eindrücklich die Vorteile des erfindungsgemäßen Verfahrens.

Beispiel 14-17

Die Profile der Beispiele 5-8 wurden einem Biegeversuch unterworfen (Dreipunkt-Biegung mit einem Probenauflagerabstand von 28 mm; in Anlehnung an DIN 29 971). Biegefestigkeits- und E-Modulwerte sind in Tabelle 3 zusammengestellt.

Tabelle 3

| Beispiel | Novolak [Gew.-%] | $\delta_B$ [MPa] | $E_B$ [GPa] |
|---|---|---|---|
| 14 | 0 | 449 | 19,25 |
| 15 | 5 | 490 | 23,4 |
| 16 | 10 | 568 | 25,16 |
| 17 | 18 | 659 | 27,2 |

**Ansprüche**

1. Verfahren zur Herstellung von verstärkten Halbzeugen/Verbundwerkstoffen unter Verwendung aliphatischer Polyamide als Thermoplastmassen, dadurch gekennzeichnet, das
die zu verwendenden Polyamidmassen (A) zu
1) 75 - 99,0 Gew.-% aus an und für sich bekannten aliphatischen bzw. teilaromatischen Polyamiden,
2) 1 - 25 Gew.-% aus phenolischen Verbindungen der allgemeinen Formel (I)

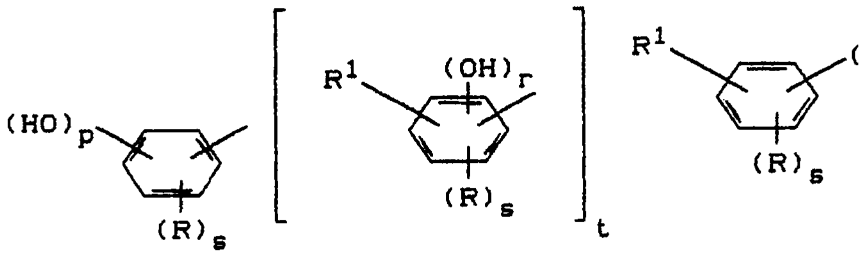

(I),

wobei
R unabhängig voneinander Wasserstoff, eine Gruppe

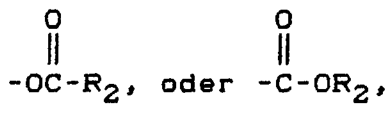

wobei $R_2$ ein $C_{1-10}$ Kohlenstoffrest ist, $C_1$-$C_{20}$-(Ar)Alkyl, $C_6$-$C_{18}$-(Alk)aryl, wobei die (Ar)alkyl- bzw. (Alk)aryl-Reste substituiert, z.B. mit -OH, oder auch über z.B. -O- mit dem Kern verknüpft sein können,
$R^1$ unabhängig voneinander eine chemische Bindung, einen $C_1$-$C_{20}$-Alkylen oder (gegebenenfalls cyclischen) Alkyliden-Rest (gegebenenfalls substituiert durch -OH), eine Ester-, eine Amidgruppe,

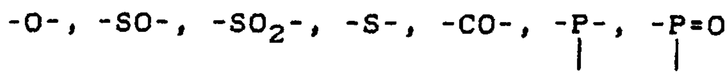

oder auch eine Anellierung zweier oder mehrerer Ringe,
p 1 oder 2, bevorzugt 1,
r für die Zahl 0, 1 oder 2, bevorzugt 1,
s für die Zahl 0, 1 oder 2, bevorzugt 0 oder 1,
t eine ganze Zahl von 0 bis 15 (Mittelwert), bevorzugt 0 - 10,
bedeuten mit der Maßgabe, das kein zu einer -OH-Gruppe orthoständiger Alkylrest R eine tertiäre Alkylgruppe sein soll, sowie
3) gegebenenfalls zusätzlich bis 100 Gew.-%, vorzugsweise 0,01 bis 50 Gew.-%, bezogen auf die Summe der Gewichte von A) und B), aus weiteren üblichen Zusatzstoffen
bestehen, und
B) mit Verstärkungsstoffen, in Füllgraden von 20-90 Gew.-% Verstärkungsstoffen in den verstärkten Halbzeugen/Verbundwerkstoffen, nach an sich üblichen Techniken,insbesondere Schmelzpultrusion oder Verpressen von Folien und Geweben (Filmstracking) zur Herstellung von verstärkten Halbzeugen/Verbundwerkzeugen verwendet werden.

2. Verfahren nach Anspruch 1, dadurch gekennzeichnet, das als Additive 2) Alkylidenbisphenole aus der Reihe 2,2-(Bis-4-hydroxyphenyl)-propan (Bisphenol A), Bis-4-hydroxyphenylmethan (Bisphenol F), 1,1-(Bis-4-hydroxyphenyl)-cyclohexan (Bisphenol Z), 1,1-(Bis-4-hydroxyphenyl)-ethan, 1,2-Bis-(4-hydroxyphenyl)-ethan, 2,2-(Bis-4-hydroxy-3,5-dimethylphenyl)-propan, 1,1-Bis-(4-hydroxyphenyl)-3,3,5-trimethylcyclohexan, 4,4′-Dihydroxydiphenylsulfon und Phenol-bzw. Alkylphenol-Formaldehyd-Kondensate (Novolake) mit im Mittel bevorzugt 3 - 12 Ringen pro Molekül, allein oder im Gemisch verwendet werden.

3. Verfahren nach Anspruch 1, dadurch gekennzeichnet, das als Additive 2) Phenol-Formaldehyd-Novolake der allgemeinen Formel (II),

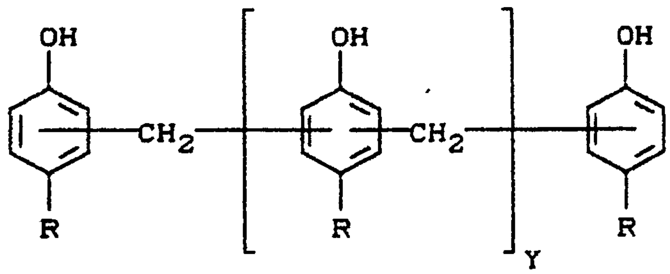

(II)

wobei
R für einen $C_{1-5}$-Alkylrest oder einen Phenylrest oder (ganz besonders bevorzugt) für Wasserstoff steht und
Y eine ganze Zahl (Mittelwert) von 1 - 10 bedeutet, so das die Molekulargewichte (Mn) der Novolake (II) zwischen ca. 300 und ca. 1500 $gmol^{-1}$ liegen,
und wobei die Novolake der Formeln (I) und (II) auch verzweigt sein können, verwendet werden.

4. Verfahren nach Anspruch 1, dadurch gekennzeichnet, das die Verbindungen 2) in den erfindungsgemäß einzusetzenden Polyamidmassen A) zu 1 - 25, bevorzugt 2 - 20, besonders bevorzugt 5 - 20 Gew.-%, enthalten sind.

5. Verfahren nach Anspruch 1, dadurch gekennzeichnet, das als Polyamide 1) PA 6, 66, 46, 610, 6 IT, 11, 12, 1010, 1212, 6/66-Copolyamide, 6/12-Copolyamide, 46/66-Copolyamide sowie Copolyamide auf Basis PA 6 bzw. PA 66 mit Terephthalsäure/Hexamethylendiamin als Cobausteinen eingesetzt werden, wobei PA 6, 66, 11, 12 oder deren Mischungen und 6/66-Copolyamide bevorzugt und PA 6 bzw. Copolyamide auf Basis PA 6 besonders bevorzugt sind.

6. Verfahren nach Anspruch 1, dadurch gekennzeichnet, daß als Verstärkungsstoffe B) Filamente (Endlosfasern) auf Basis von Glas, Kohlenstoff, Polyacrylnitril, Aramiden und Metallen oder Matten bzw. Rovings daraus eingesetzt werden, und daß der Füllgrad 30 - 85 Gew.-% und bevorzugt 40 -85 Gew.-% beträgt.

7. Verfahren nach Anspruch 1, dadurch gekennzeichnet, daß zur Herstellung der verstärkten Halbzeuge/Verbundwerkstoffen aus den für Thermoplastmatrices bekannten Techniken, die Schmelzepultrusion und das Verpressen von Folien und Geweben (film-stacking) eingesetzt werden.

8. Verfahren nach Anspruch 1, dadurch gekennzeichnet, daß als übliche Zusatzstoffe 3) UV-Stabilisatoren, Antioxidantien, Nukleierungsmittel, Formtrennmittel, weitere Fließhilfen, Kristallisationsbe schleuniger, Kristallisationsverzögerer, Weichmacher, mineralische Füllstoffe, polymere Legierungspartner, wie sie im Stand der Technik für Polyamide beschrieben sind, eingesetzt werden.

9. Verstärkte Halbzeuge und Verbundwerkstoffe, hergestellt nach dem Verfahren der Ansprüche 1 - 8.

10. Fertigteile aus mit Endlosfasern verstärkten Halbzeugen und Verbundwerkstoffen nach Anspruch 9.